# EUROPÄISCHE PATENTSCHRIFT

(11) **EP 2 254 209 B1**
(45) Veröffentlichungstag und Bekanntmachung des Hinweises auf die Patenterteilung: **14.08.2019**
(21) Anmeldenummer: 10000428.2
(22) Anmeldetag: 18.01.2010
(51) Int. Cl.: H02B 13/00

(54) **Steckbare Primärleistungsverbindungen zweier Module einer gasisolierten Hochspannungsschaltanlage**
Pluggable primary output connections between two modules of a gas-insulated, high voltage switchgear
Connexions de sortie primaires enfichables de deux modules d'une installation de commutation haute tension à isolation gazeuse

(30) Priorität: 20.05.2009 DE 102009022105; 20.05.2009 DE 102009022127; 23.09.2009 DE 102009042644
(43) Veröffentlichungstag der Anmeldung: 24.11.2010
(73) Patentinhaber: ABB Schweiz AG, 5400 Baden (CH)
(72) Erfinder: Zwicky, Daniel, 5443 Niederrohrdorf (CH); Saxl, David, 8046 Zürich (CH); Schalber, Horst, 61137 Schöneck (DE); Mann, Michael, 63755 Alzenau (DE); Kuhl, Daniel, 63477 Maintal (DE)
(74) Vertreter: ABB Patent Attorneys

(56) Entgegenhaltungen:
- EP-A1- 0 199 249
- EP-A1- 0 437 762
- EP-A1- 0 999 624
- DE-A1- 3 429 711
- DE-A1- 4 312 261
- DE-A1- 4 312 617
- DE-C1- 10 139 251
- FR-A1- 2 279 239
- US-A- 3 712 969

## Beschreibung

Die vorliegende Erfindung betrifft eine steckbare Primärleistungs-Verbindung zweier Module einer gasisolierten Hochspannungsschaltanlage, auch GIS genannt, nach dem Oberbegriff des Anspruches 1. Aus der Bezeichnung geht hervor, dass es sich um eine elektrische Verbindung zwischen zwei Primärleitern zweier aneinander gekuppelter GIS-Module geht, deren Primärleiter pro Phase auf demselben elektrischen Potential liegen.

Beim einem ersten, weit verbreiteten Typ von gasisolierten Hochspannungs-Schaltanlagen sind die Primärleistungsverbindungen zweier aneinandergrenzender GIS-Bausteine, auch GIS-Module genannt, in einem Flanschbereich jedes Gehäuses der GIS-Bausteine miteinander über eine Schraubverbindung verbunden. Dabei werden die Gehäuseflansche aneinander gepresst und eine dazwischen angeordnete Dichtung derart zusammengedrückt, dass eine Schnittstelle zwischen den beiden Gehäusen der GIS-Bausteine gasdicht abgedichtet ist. Es versteht sich von selbst, dass die Montage sowie die Demontage von derartigen GIS-Modulen verhältnismässig arbeitsintensiv sind.

Bei einem zweiten Typ von Hochspannungs-Schaltanlagen sind gewisse Anschlussmodule, wie beispielsweise ein Spannungssensor, in einem Feststoffisolator vergossen und über einen Steckkontakt mit einem Primärleiter eines GIS-Moduls verbindbar. Leider trägt der Feststoffisolator erheblich zur Gesamtmasse des Anschlussmoduls bei. Ein Vertreter eines solchen Typs ist beispielsweise in der DE 4445082 C1 offenbart.

Bei einem dritten Typ von gasisolierten Hochspannungs-Schaltanlagen erfolgt die elektrische Verbindung der Primärleiter zweier GIS-Module über eine Trockensteckkontaktverbindung. Ein Vertreter eines solchen Typs ist beispielsweise in der DE 4312617 A1 oder der DE 4312261 A1 offenbart. Diese Druckschriften zeigen jeweils eine Steckverbindung in einem Schaltfeld für Mittelspannungsanlagen, die eine Konstruktion der Eingangs genannten Art zeigt, wobei nicht näher ausgeführt ist, wie die Schaltanlagengehäuse miteinander verbunden sind. Da diese Anordnung für Mittelspannungsanlagen gedacht ist und nicht für Hochspannungsanlagen (GIS), sind solche Trockensteckkontaktverbindungen lediglich für verhältnismäßig geringe Gasdrücke einsetzbar, welche wenig über dem Atmosphärendruck liegen.

Aus der EP 0 437 762 A1 ist eine Schaltstation in Baukastenform bekannt geworden, bei der die einzelnen Bausteine mittels Hohlkontaktaufnahmen und in diese einsteckbaren Doppelsteckelementen zusammengesetzt sind. Auch diese Ausführung ist für Mittelspannung gedacht, so dass das für die o.g. Druckschriften gesagte auch hier gilt.

Aufgrund der zunehmenden Nachfrage nach kleineren, aber dennoch leistungsfähigen GIS für Hochspannungsanlagen, kommt der Kompaktheit einer GIS eine entscheidende Bedeutung zu.

Wenn von einer GIS beispielsweise höhere elektrische Leistungen bei gleichbleibendem Schutzgas und gleichbleibendem Funktionsaufbau und gleichbleibenden Materialien gefordert werden, wirkt sich das in der Regel negativ auf die Abmessungen der GIS aus, da die GIS aufgrund vergrösserter Gehäusedurchmesser weniger Kompakt realisiert werden kann.

Es ist eine Aufgabe der vorliegenden Erfindung, eine gasisolierte Hochspannungsschaltanlage mit einer verbesserten Verbindung zweier benachbarter GIS-Module vorzulegen, welche eine Kupplung zweier benachbarter Module ohne Quermontagemodule ermöglicht.

Diese Aufgabe wird erfindungsgemäß mit dem Gegenstand nach Anspruches 1 gelöst.

In einer Basisausführungsform weist die gasisolierte Hochspannungsschaltanlage einen ersten Modul und einen zweiten Modul auf, wobei diese Module jeweils einen als Druckbehälter ausgeführten Gasraum mit mindestens zwei Phasenleitern aufweisen. Der Gasraum ist derart mit einem Isoliergas gefüllt, dass die mindestens zwei Phasenleiter im jeweiligen Modul elektrisch isoliert angeordnet sind. Der erste Modul ist derart mit dem zweiten Modul verbunden, dass der erste Gasraum und der zweite Gasraum durch einen Isolierkörper hydraulisch voneinander getrennt sind, und dass die Phasenleiter im ersten Modul mit den Phasenleitern gleichen elektrischen Potentials des zweiten Moduls elektrisch verbunden sind. Die beiden Gasräume pro Phasenleiter weisen jeweils eine gehäuseseitige Anschlussöffnung auf, welche den jeweiligen Phasenleiter umgreift und in einen flanschartigen Adapterabschnitt mündet. In jedem Fall dient je eine gehäuseseitige Anschlussöffnung zur separaten Aufnahme von einem einzigen Primärphasenanschluss. Unter dem Begriff 'einphasiger Isolator' wird ein elektrischer Isolator verstanden wird, durch welchen lediglich ein Nominalleiter (eine Primärphase) geführt ist. Weiter ist der flanschartige Adapterabschnitt des ersten Moduls mit dem flanschartigen Adapterabschnitt des ersten Moduls mechanisch lösbar verbunden. Die mindestens zwei Phasenleiter im ersten Modul mit den mindestens zwei Phasenleitern gleichen elektrischen Potentials des zweiten Moduls sind jeweils über eine lösbare Steckverbindung elektrisch miteinander verbunden. Dabei sind die zwei Gasräume durch den Isolierkörper der Steckverbindungen voneinander getrennt. Die Steckverbindung ist dabei mindestens zweiteilig und umfasst in einer Basisausführung ein Buchsenelement und einen damit verbindbaren Kontaktstift.

Anders ausgedrückt weist der erste Modul und der zweite Modul jeweils pro Phasenleiter jeweils eine gehäuseseitige Anschlussöffnung zur separaten Aufnahme von jeweils einem Phasenleiter (Nominalleiter eines elektrischen Potentials) der Schaltanlage auf. Der Begriff 'separate Aufnahme' bedeutet, dass der Phasenleiter an der Schnittstelle, d.h. der lösbaren Steckverbindung, durch einen einphasigen Isolator hindurchgeführt ist. Unter dem Begriff 'einphasiger' Isolator ein elektrischer Isolator verstanden wird, durch welchen lediglich ein Nominalleiter geführt ist.

Wenn bei einer dreiphasigen Schaltanlage die Anschlussöffnung flächenmässig in einer gemeinsamen Öffnungs-Ebene angeordnet sind, ist eine besonders vorteilhafte, vielseitige Verwendung der Schnittstelle mit den lösbaren Steckverbindungen erzielbar.

Vor der Montage der Steckverbindungen bilden die Anschlussöffnungen jedes Moduls jeweils einen separaten Zugang zum jeweiligen Gasraum von ausserhalb des jeweiligen Gehäuses.

Die Basisausführungsform vereinigt gegenüber den eingangs genannten, bekannten elektrischen Verbindungen zwischen zwei Primärleitern zweier aneinander gekuppelter GIS-Module die Vorteile einer Steckkontaktverbindung zur Leistungsübertragung und einer Schraubflanschverbindung zur mechanischen Verbindung zweier benachbarter Module in einer Schnittstelle zwischen den Modulen.

Wenn die flanschartigen Adapterabschnitten beider Module von einer Hauptkammer des Gehäuses abstehen, so dass sie zumindest teilweise von der der Kontaktfläche der beiden flanschartigen Adapterabschnitten gegenüberliegenden Seite her zugänglich sind, können die beiden flanschartigen Adapterabschnitte spangenartig, z.B. mit einem Spannbügel, zusammengepresst werden.

Bei der Basisausführungsform der gasisolierten Hochspannungsschaltanlage sind die weiblichen und/oder männlichen Steckkontaktteile der lösbaren Steckverbindung vor der Montage der beiden Module aneinander vom Inneren der Hauptkammer des Gasraums her in den flanschartigen Adapterabschnitten mit einer lösbaren Sicherungseinrichtung, beispielsweise einem Spannring oder Sicherungsring für Wellen nach DIN 472 (etwa einem Seegerring oder dergleichen), in ihrer zugedachten Position in der jeweiligen Anschlussöffnung gehalten. Eine derartige Ausführungsform ist vorteilhaft, da sie eine Kupplung zweier benachbarter Module ohne Quermontagemodule ermöglicht. Je nach Ausgestaltung der Halterung der weiblichen und/oder männlichen Steckkontaktteile der lösbaren Steckverbindung ermöglicht eine derartige Konfiguration der Schnittstelle einen Ausbau eines Moduls, etwa eines Schaltfeldes, ohne dass eine Evakuation des Isoliergases der benachbarten Module bzw. des benachbarten Modul erforderlich ist. Nachfolgend werden die Vorteile anhand eines Beispiels illustriert, in welchem Modul A, das mit dem benachbarten Modul B verbunden ist, aus einer gasisolierten Unterstation ausgebaut werden muss. Nach dem Abpumpen des Isoliergases aus dem Gasraum des Moduls A wird durch einen Servicedeckel des Gehäuses - und falls erforderlich einer Demontage oder Teildemontage von Nominalleiterabschnitten im Inneren des Gasraums - der Sicherungsring für Wellen nach DIN 472 gelöst und beispielsweise das weibliche oder männliche Steckkontaktteil der lösbaren Steckverbindung über den Gasraum des jeweiligen Moduls ausgebaut. Analog erfolgt der Ausbau im Fall, wo die lösbare Steckverbindung aus zwei weiblichen Steckkontaktteilen gebildet ist, welche über einen Stiftkontakt elektrisch miteinander verbunden sind.

Je nach Ausführungsform ist die Steckverbindung als Trockensteckkontaktkupplung ausgeführt. Wenn die Steckverbindung als Trockensteckverbindung ausgebildet ist, ermöglicht dies ein Anschliessen der Hochspannungsmesseinheit an den benachbarten Modul (Anschlussmodul), ohne dass eine Isoliergasmanipulation wie etwa ein Evakuieren des Gasvolumens der Hochspannungsmesseinheit oder des benachbarten Moduls erforderlich ist. In der Folge ermöglich diese Ausführungsform einen wirtschaftlichen Reparatur- und (Wieder-) Inbetriebsetzungsprozess. Unter dem Begriff Trockensteckverbindung wird eine elektrisch isolierende Steckverbindung verstanden, welche eine Hochspannungsisolation an der Umgebungsluft ermöglicht. Beim Kuppelvorgang verdrängt das duktile Isolationsmaterial die Umgebungsluft weitestgehend aus der Steckkupplung.

Wenn die Gasräume der Module Druckbehälter sind, welche für einen Betrieb bei einem Nominaldruck von mindestens 2 bar im jeweiligen Gasraum ausgelegt sind, sind damit GIS-Hochspannungsmodule realisierbar. Derartige Module weisen für eine über-50kV-Anwendung beispielsweise eine SF6-Isoliergasbefüllung mit einem Betriebsdruck von 5 bar auf.

Erstrecken sich mindestens zwei Steckverbindungen zumindest beim flanschartigen Adapterabschnitt parallel zueinander liegend in einer ersten Ebene, so können damit vielseitig verwendbare, modulare Kupplungen realisiert werden.

Sind die flanschartigen Adapterabschnitte gleichzeitig als Abstellfläche zum Zwischenlagern eines Moduls vorgesehen, etwa während der Montage, so ist es vorteilhaft, wenn zumindest die flanschartigen Adapterabschnitte des ersten Moduls in einer zweiten Ebene angeordnet sind. Die zweite Ebene ist quer zur ersten Ebene angeordnet, insbesondere rechtwinklig zur ersten Ebene. Dadurch liegen die jeweiligen Mitten der Anschlussöffnungen auf einer gemeinsamen, ersten Gerade. Ein weiterer Vorteil dieser Ausführungsform liegt in der weiter erhöhten vielseitigen Verwendbarkeit der Module, welche eine optimale Modularität gewährleisten.

Bei einer Ausführungsform sind die Adapterabschnitte von mindestens zwei Anschlussöffnungen desselben Moduls jeweils zumindest teilweise in einen gemeinsamen Adapterabschnitt integriert. Dies erlaubt beispielsweise eine vereinfachte Bearbeitung der Anschlussflächen nach dem Giessen des Gehäuses, verbunden mit einer typischerweise verbesserten Form- und Masshaltigkeit.

Je nach Anforderungen an die Module sind die Adapterabschnitte von mindestens zwei Anschlussöffnungen desselben Moduls jeweils zumindest teilweise in einen gehäuseseitigen Wandabschnitt des jeweiligen Moduls integriert. Diese Massnahme erlaubt beispielsweise eine vereinfachte Form des Gehäuses, wodurch sich wirtschaftliche Vorteile ergeben.

In einer Ausbildungsform von gasisolierten Hochspannungsmodulen weisen der erste Modul und der zweite Modul mindestens je drei Phasenleiter auf. Dabei sind die mindestens drei Steckkontakte in einem regelmässigen Abstand voneinander entfernt angeordnet, was die vielseitige Anwendung ermöglicht, etwa einen um 180 Grad verdrehten Einbau gegenüber dem benachbarten Anschlussmodul (z.B. dem zweiten Modul).

Je nach Ausführungsform der Steckverbindung weist diese mindestens ein Steckkontakt mit einem ersten Buchsenelement und einem zweites Buchsenelement auf. Im Nominalbetrieb der zwei benachbarten Module sind diese Buchsenelemente über ein Kontaktelement miteinander elektrisch verbunden. Mit Vorteil ist dabei das erste Buchsenelement am Adapterabschnitt des ersten Moduls befestigt und das zweite Buchsenelement am Adapterabschnitt des zweiten Moduls befestigt.

In einer alternativen Ausführungsform der Steckverbindung weist diese pro Leiter/Phase jeweils ein weibliches und ein männliches Kupplungsteil auf. So weist beispielsweise die Steckverbindung ein Buchsenelement und einen elektrisch damit verbindbares, beziehungsweise verbundenes, Kontaktelement auf, wobei das erste Buchsenelement am Adapterabschnitt des ersten Moduls befestigt ist und das Kontaktelement am Adapterabschnitt des zweiten Moduls befestigt ist.

Mit einer Ausführungsform eines dreiphasig gekapselten ersten und zweiten Moduls ist eine Codierung der Montageposition des ersten Moduls mit dem zweiten Modul erzielbar, wenn beispielsweise zwei Phasen R, S des ersten Moduls Buchsenelemente und eine Phase T einen Stiftkontakt als Steckkontaktanschlüsse aufweisen, während die zwei entsprechenden Phasen R, S des zweiten Moduls als Stiftkontakte ausgebildet sind, während die dritte Phase T des zweiten Moduls als Buchsenelement ausgeführt ist. Mit einer derartigen Konfiguration ist es möglich, eine narrensichere Montage des ersten Moduls am zweiten Modul zuverlässig gewährleisten zu können, selbst wenn wenig geschultes Personal die Montage übernehmen sollte.

Bei einer Basisausführungsform der flanschartigen Adapterabschnitte sind die Adapterabschnitte des ersten Moduls und die Adapterabschnitte des zweiten Moduls zur mechanischen Verbindung der zwei Module jeweils mit mindestens einer Schraubverbindung miteinander verbindbar beziehungsweise verbunden.

In einer alternativen mechanischen Verbindung der zwei Module, sind die Adapterabschnitte des ersten Moduls und die Adapterabschnitte des zweiten Moduls jeweils mit mindestens einer Klemmverbindung miteinander verbindbar. Dabei umgreift die mindestens eine Klemmverbindung die Adapterabschnitte zumindest abschnittweise umfangsseitig.

Je nach Anforderungen an die Steckkontaktverbindung und die Wartbarkeit ist der Isolierkörper mehrteilig und umfasst pro Phase mindestens ein becherförmiges Isolationselement und ein mit dem becherförmigen Isolationselement dichtend zusammenwirkendes, beispielsweise zylinderförmiges Isolationselement, das etwa einen sich zwischen den ebenfalls becherförmig ausgebildeten Buchsenelementen erstreckenden Kontaktelement zumindest bereichsweise lateral umfasst. Falls erforderlich, ist das becherförmige Isolationselement in seinem dem flanschartigen Adapterabschnitt zugewandten Ende mechanisch verstärkt. Dabei weist dieses Ende des becherförmigen Isolationselements beispielsweise Verstärkungen aus faserverstärktem Kunststoff und/oder Metall auf. Das zylinderförmige Isolationselement bildet die eigentliche Trockensteckverbindung und schmiegt sich an das becherförmige Isolationselement und die es umgebende Geometrie. Bei einer Hochspannungsanwendung ist das zylinderförmige Isolationselement ein Hochspannungsisolator aus einem duktilen, Isolationsmaterial wie etwa Silikon. Die duktile Isolierstoffmasse des Isolationselements dient dazu, eine elektrische Isolation gegen Luft zu realisieren und beim Zusammenfügen der Steckkontaktverbindung die beispielsweise in den Buchsenelementen vorhandene Luft derart zu verdrängen, dass die duktile Isolierstoffmasse am Kontaktelement und am becherförmigen Isolationselement des/der Buchsenelemente(s) zu realisieren. Dies ist insbesondere bei einem Einsatz in einer gasisolierten Hochspannungsschaltanlage erforderlich. Damit ist die Steckverbindung als Trockensteckverbindung ausgebildet.

Wenn das Buchsenelement und/oder das becherförmige Isolationselement entsprechend angepasst werden, ist eine Anordnung einer sich in Richtung der Steckverbindungen, beziehungsweise der Steckachse, erstreckenden Feldsteuerelektrode beim Isolierkörper realisierbar. Dabei sind auch Ausführungsformen denkbar, bei welchen die mindestens eine Feldsteuerelektrode zumindest teilweise am oder im Isolierkörper integriert ist.

Alternativ dazu ist es denkbar, dass die mindestens eine Feldsteuerelektrode als Einlegeelement geformt ist, welches vor dem Verbinden des ersten GIS-Moduls mit dem zweiten GIS-Modul in das becherförmige Isolationselement eingesetzt und/oder in das zylinderförmige Isolationselement einlegbar ist.

Die im Zusammenhang mit den GIS-Modulen genannten Vorteile und Effekte gelten sinngemäss für eine gasisolierte Schaltanlage mit mindestens zwei über eine Steckverbindung miteinander kontaktierte GIS-Module.

In der Zeichnung sind Ausführungsbeispiele der Erfindung rein schematisch dargestellt. Dabei zeigt:
- Fig. 1: einen Längsschnitt durch eine erste Ausführungsform zweier dreiphasig gekapselter HV-GIS-Module in entkuppeltem Zustand;
- Fig. 2: einen Längsschnitt durch eine zweite Ausführungsform zweier dreiphasig gekapselter HV-GIS-Module in entkuppeltem Zustand;
- Fig. 3: eine dreidimensionale Ansicht einer dritten Ausführungsform zweier dreiphasig gekapselter HV-GIS-Module in entkuppeltem Zustand;
- Fig. 4: eine erste Variante der Steckverbindung in ausgebrochen dargestellten Längsquerschnitt gemäss der dritten Ausführungsform in gekuppeltem Zustand entlang der Schnittebene IV-IV in Figur 3;
- Fig. 5: eine zweite Variante der Steckverbindung in ausgebrochen dargestellten Längsquerschnitt analog der ersten Ausführungsform in gekuppeltem Zustand entlang der Schnittebene IV-IV in Figur 3;
- Fig. 6: eine Ansicht des in Figur 5 gezeigten flanschartigen Adapterabschnitts des ersten Moduls in Richtung X entsprechend den Pfeilen VI-VI;
- Fig. 7: eine dritte Variante der Steckverbindung in ausgebrochen dargestellten Längsquerschnitt analog der zweiten Ausführungsform in gekuppeltem Zustand entlang der Schnittebene IV-IV in Figur 3;
- Fig. 8: eine Ansicht des in Figur 7 gezeigten flanschartigen Adapterabschnitts des ersten Moduls in Richtung X entsprechend den Pfeilen VI-VI;
- Fig. 9: eine vierte Variante der Steckverbindung in ausgebrochen dargestellten Längsquerschnitt analog der zweiten Ausführungsform in gekuppeltem Zustand entlang der Schnittebene IV-IV in Figur 3;

- Fig. 10: eine Ansicht des in Figur 9 gezeigten flanschartigen Adapterabschnitts des ersten Moduls in Richtung X entsprechend den Pfeilen VI-VI;
- Fig. 11: eine dreidimensionale Ansicht eines alternativen HV-GIS-Moduls in entkuppeltem Zustand; und
- Fig. 12: einen vereinfacht dargestellten, lokalen Querschnitt des Moduls von Figur 11 entlang der Schnittebene XII-XII in Figur 11.

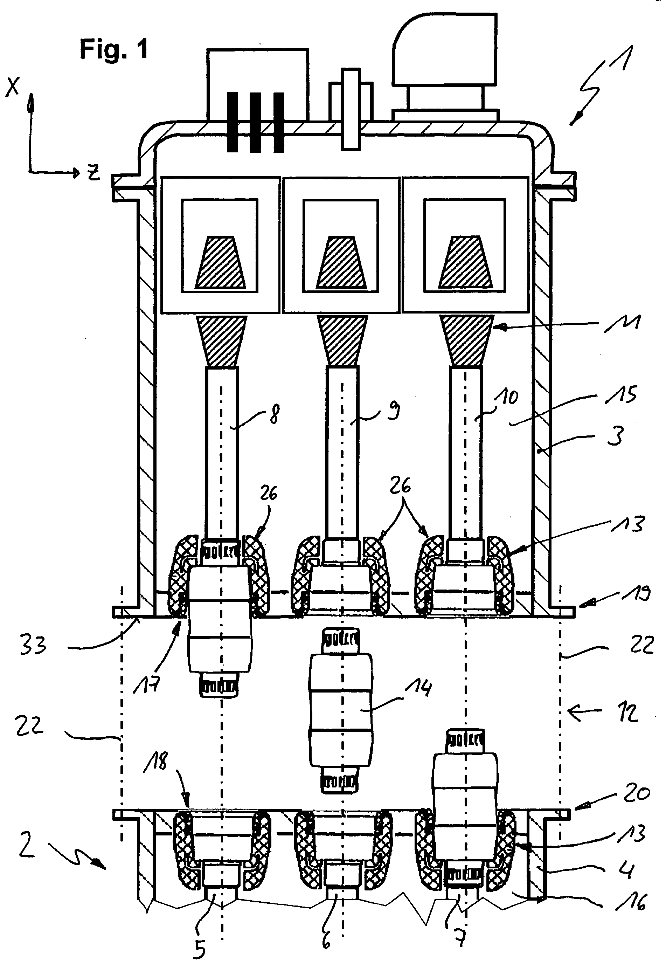

Der Längsschnitt durch eine erste Ausführungsform zweier dreiphasig gekapselter HV-GIS-Module in entkuppeltem Zustand von **Figur 1** zeigt beispielweise einen ersten GIS Modul 1, welcher mit einem zweiten Modul 2 verbindbar ist. Der erste Modul 1 ist beispielsweise ein Spannungswandler, während der zweite Modul 2, welcher lediglich in dessen Anschlussbereich gezeigt ist, beispielsweise einen Verbindungsmodul in einem gasisolierten Schaltfeld darstellt. Beide Module verfügen jeweils über ein Gehäuse 3, 4. Das Gehäuse 4 umfasst drei Nominalleiteranschlüsse (Phasenleiter) 5, 6, 7, welche sich in X-Richtung erstrecken. Das Gehäuse 3 umfasst ebenfalls drei entsprechende Nominalleiteranschlüsse (Phasenleiter) 8, 9, 10, welche mit entsprechenden Messwandlern 11 verbunden sind. Die Phasenleiter 5, 6, 7 des ersten Moduls sind mit den Phasenleitern 8, 9, 10 des zweiten Moduls 2 über jeweils eine Steckverbindung 12 pro Phase elektrisch miteinander verbindbar. Die elektrische Verbindung der Phasenleiter 5, 6, 7 des ersten Moduls mit den Phasenleitern 8, 9, 10 des zweiten Moduls 2 erfolgt ausschliesslich über die Steckverbindungen 12. Bei der in Figur 1 gezeigten Ausführungsform der Module 1, 2 weisen alle Phasenleiter endseitig je ein Buchsenelement 13 auf. In einer Basisvariante ist ein isolierender Abschnitt des Buchsenelementes 13 aus Giessharz gefertigt, während eine leitende, metallische Steckerbuchse 41 als Nominalleiteranschluss des Buchsenelements 13 dient. Je nach Anforderungen sind anstelle des Giessharzes andere, geeignete Materialen jedoch dafür einsetzbar. Die jeweils zwei Buchsenelemente 13 einer Phase, etwa R, S, T, werden bei der Montage der zwei Module 1,2 miteinander über ein leitendes Kontaktelement 14 elektrisch miteinander verbunden.

In Figur 1 ist der besseren Darstellbarkeit wegen der erste Modul 1 und der zweite Modul 2 während deren Montage aneinander gezeigt.

Wie aus den in Figur 1 gezeigten Positionen des Kontaktelement 14 hervorgeht, ist letzterer je nach Montageanforderungen bei der Montage entweder dem ersten Modul (Phase ganz links), keinem Modul (Phase in Mitte) oder dem zweiten Modul (Phase ganz rechts) zugeordnet. In der Praxis empfiehlt sich bei dieser Ausführungsform jedoch eine uniforme Zuordnung der Kontaktelement 14 für alle drei Phasen.

Die Gehäuse 3, 4 begrenzen jeweils einen Gasraum 15, 16 eines jeden Moduls 1, 2 und münden pro Phasenleiter jeweils in einer gehäuseseitigen Anschlussöffnung 17, 18, welche den jeweiligen Phasenleiter umgreift und in einem flanschartigen Adapterabschnitt 19, 20 mündet.

Die beiden flanschartigen Adapterabschnitte 19, 20 sind beispielsweise über eine vereinfacht dargestellte Schraubverbindung 22 mechanisch miteinander verbindbar. Die flanschseitige Abdichtung der Gasräume 15, 16 erfolgt über Isolationsabschnitte der Buchsenelemente 13, welche im Betrieb gleichzeitig die elektrische Isolation des Phasenleiters gegen Masse - sprich die Gehäuse 3, 4 - gewährleisten.

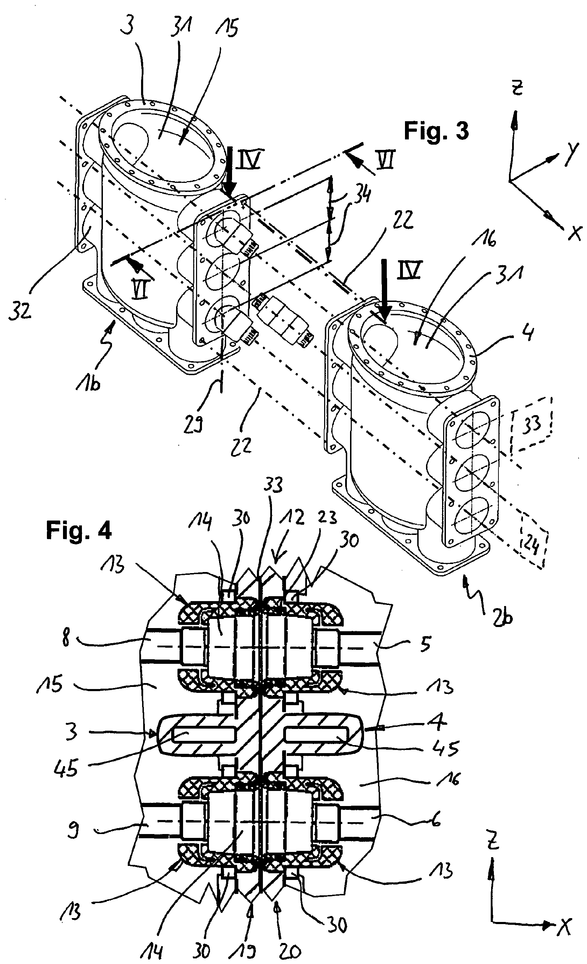

Aus Figur 1 geht weiter hervor, dass die Buchsenelemente 13 alle innerhalb einer sich in einer zweiten Ebene 33 erstreckenden Konturlinie angeordnet sind. In Zusammenschau mit Figur 3 etwa wird ersichtlich, dass die sich die zweite Ebene 33 bestens als Abstellfläche zum Zwischenlagern des GIS-Moduls, etwa während der Montage, anbietet. Zudem sind bei dieser Variante die Primärleiteranschlüsse, beziehungsweise Steckkontaktteile verhältnismässig gut gegen äussere Störeinflüsse wie Schläge und dergleichen geschützt.

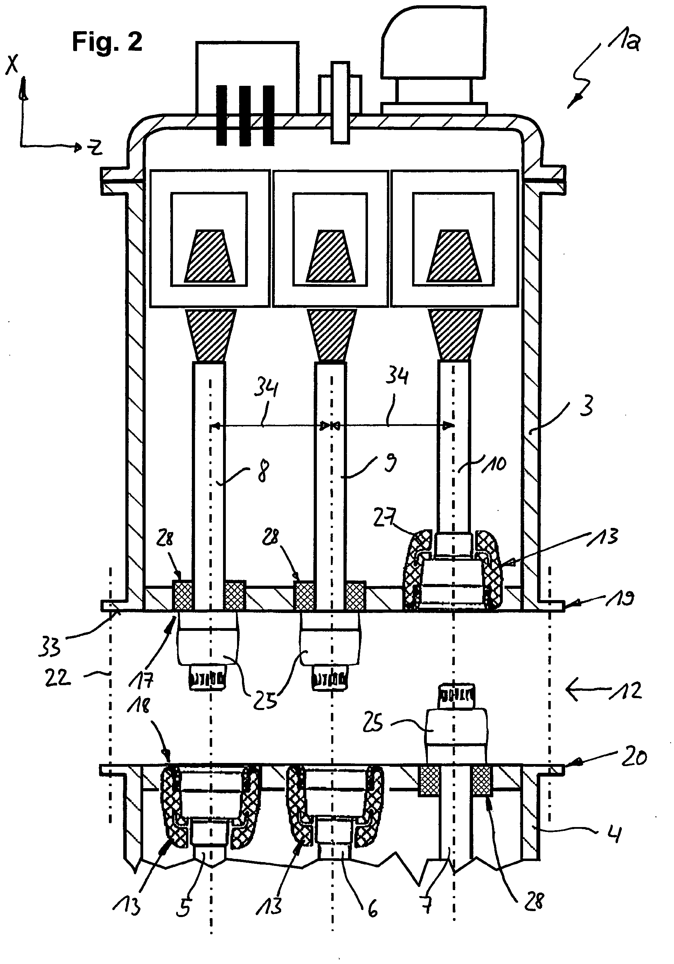

In der Figur 2 ist eine zweite Ausführungsform zweier dreiphasig gekapselter HV-GIS-Module in entkuppeltem Zustand ähnlich der Figur 1 gezeigt. Aufgrund dieser Ähnlichkeit wird nachfolgend nur auf die Unterschiede zur Figur 1 eingegangen. Gleiche oder gleich wirkende Elemente sind mit denselben Bezugszeichen versehen. Die flanschartigen Adapterabschnitte 19, 20 der Gehäuse 3, 4 der Module 1a, 2a weisen pro Phase wiederum je eine gehäuseseitige Anschlussöffnung 17, 18 im Anschlussbereich der jeweiligen Module auf. Anstelle der Buchsenelemente 13 weisen nun zwei Phasenanschlüsse des ersten Moduls als Teil der jeweiligen Steckverbindungen 12 einen Kontaktstift 25 als männlichen Teil, sowie eine Kontaktbuchse als weibliches Kontaktelement auf. Dementsprechend weisen zwei Phasenanschlüsse des zweiten Moduls als Teil der jeweiligen Steckverbindungen 12 eine Kontaktbuchse als weibliches Kontaktelement sowie eine Phase einen Kontaktstift 25 als männlichen Teil des Kontaktelements auf.

Es versteht sich von selbst, dass die unterschiedlich geformten Elemente 13, 25 unterschiedliche Isolatoren zur elektrischen Isolation der Primärteile gegen Masse (Gehäuse) erfordern. Der mehrteilig ausgeführte Isolationskörper 26 umfasst pro Phase ein becherförmiges Isolationselement 27, während der Kontaktstift 25 des Phasenleiters 8, 7 in einer Basisausführungsform beispielsweise lediglich eine Isolationshülse 28 aufweist. Sowohl das becherförmige Isolationselement 27, als auch die Isolationshülse 28 bilden gasdichte, feste Verbindungen des elektrischen Isolators zum jeweiligen Gehäuse 3, 4 im Bereich der flanschartigen Adapterabschnitte 19, 20. Anders ausgedrückt, bilden die Isolationshülse 28 und die becherförmige Isolationselement 27 gemeinsam den Isolationskörper 26 des ersten Moduls 1.

Aus den Figur 2 geht weiter hervor, dass die drei abschnittsweise lediglich als strichpunktierte Linie vereinfacht dargestellten Phasenleiter, welche sich in X-Richtung erstrecken, rechtwinklig zur zweiten Ebene 33, erstrecken welche durch die Kontaktfläche der flanschartigen Adapterabschnitte gebildet ist. Dabei sind die gehäuseseitigen Anschlussöffnungen 17, 18 in einem regelmässigen Abstand 34 voneinander entfernt angeordnet.

Die Figur 2 veranschaulicht die Codierbarkeit beziehungsweise die damit vorbestimmte Montageposition des ersten Moduls 1a auf dem zweiten Modul 2a.

Die in **Figur 3** gezeigte dreidimensionale Ansicht einer dritten Ausführungsform zweier dreiphasig gekapselter HV-GIS-Module im entkuppelten Zustand unterscheidet sich zur ersten Ausführungsform durch die unterschiedliche Befestigung der Buchsenelemente 13. Aufgrund dieser Ähnlichkeit wird nachfolgend nur auf die Unterschiede zur Figur 1 eingegangen. Gleiche oder gleich wirkende Elemente sind wiederum mit denselben Bezugszeichen versehen.

Aus Figur 3 geht in Zusammenschau mit **Figur 4** eine erste Variante der Steckverbindung hervor, in der die Buchsenelemente 13 mittels einer lösbaren Sicherungseinrichtung, beispielsweise einem Spannring 30 im Adapterbereich des flanschartigen Adapterabschnittes oder im röhrenförmigen, eine Hauptkammer 31 des Gasraums 15, 16 mit dem flanschartigen Adapterabschnitt 19, 20 Gehäuseabschnitt 32 gehalten sind. Beim Ausbau des ersten Moduls aus einem Schaltfeld einer Unterstation ist die Nominalkontaktverbindung durch einen (in Figur 3 nicht gezeigten bzw. bereits entfernten Servicedeckel des Gehäuses 3 ausbaubar. Dabei wird der Spannring 30 aus seiner Nut im Buchsenelement 13 gehoben und anschliessend das weibliche oder männliche Steckkontaktteil 13 der lösbaren Steckverbindung 12 über den Gasraum 15 des ersten Moduls 1b entfernt. Bei dieser Ausführungsform ist das Buchsenelement 13 an seinem, dem flanschartigen Adapterabschnitt 19 zugewandten Ende zumindest partiell als Klemmflansch 23 ausgebildet. Dementsprechend weist die Gehäusewand beziehungsweise der flanschartige Adapterabschnitt im Bereich der gehäuseseitigen Anschlussöffnung 17 eine Aufnahmekontur, etwa mit einer Komplementärform, zum Aufnehmen des Klemmflansches 23 auf.

Die Montage beziehungsweise die Wiederherstellung der Nominalkontaktverbindung erfolgt in umgekehrter Reihenfolge.

Aus der Figur 3 geht weiter hervor, dass die drei abschnittsweise lediglich als strichpunktierte Linie vereinfacht dargestellten Phasenleiter, welche sich in X-Richtung erstrecken, in einer ersten Ebene 24 angeordnet sind. Diese ersten Ebene 24 erstreckt sich rechtwinklig zur zweiten Ebene 33 in Z-Richtung und in X-Richtung, wobei die zweite Ebene 33 durch die Kontaktfläche der flanschartigen Adapterabschnitte gebildet ist. Dabei sind die gehäuseseitigen Anschlussöffnungen 17, 18 entlang einer rechtwinklig zur Steckrichtung X verlaufenden Gerade 29 in einem regelmässigen Abstand 34 voneinander entfernt angeordnet.

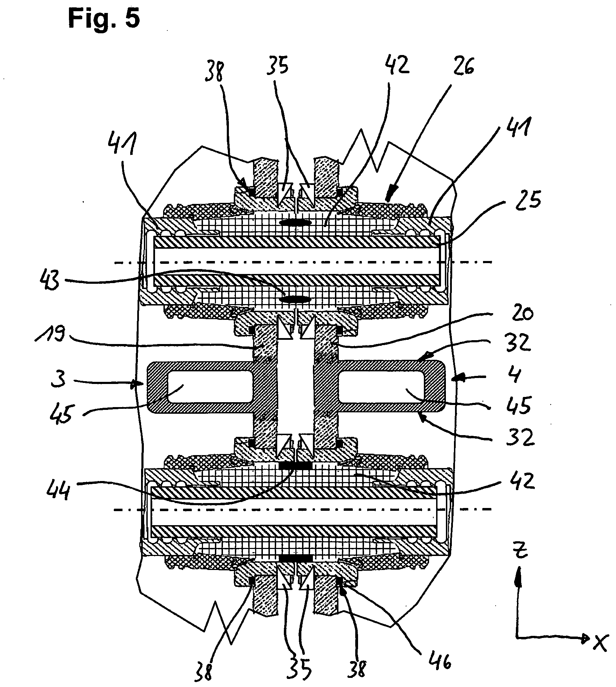

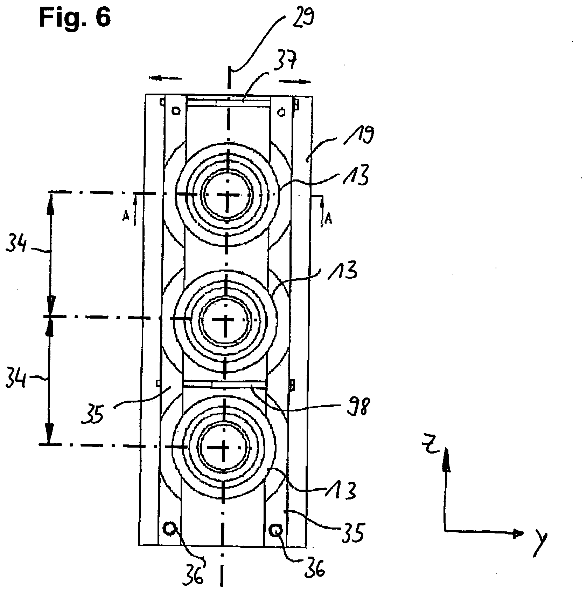

Aus Figur 3 geht in Zusammenschau mit **Figur 5** und **Figur 6** eine zweite Variante der Steckverbindung hervor. Die Figur 6 entspricht einer Ansicht des Moduls 1 entsprechend der in Figur 3 gezeigten Schnittlinie VI-VI. Aufgrund der Ähnlichkeit der Ausführungsformen wird nachfolgend nur auf die Unterschiede zur Figur 4 eingegangen. Gleiche oder gleich wirkende Elemente sind wiederum mit denselben Bezugszeichen versehen.

Die Befestigungen von drei nebeneinander beziehungsweise hier übereinander in einer geraden Linie 29 angeordneten, als Steckerbuchsen ausgeführten Buchsenelementen 13 gezeigt (siehe auch Figur 3). Dabei sind die Buchsenelementen 13 jeweils von der Innenseite des Gehäuses her - also durch den Gasraum 15 - her in darin eingeformte gehäuseseitige Anschlussöffnungen 17 eingreifen.

Jedes der Buchsenelemente 13 ist hierbei an seinem der Anschlussöffnung 17 zugewandten flanschähnlichen Ende mit einer gleichmässig am Umfang angeordneten, nicht näher gezeigten Nut versehen, in welche jeweils einander diametral gegenüberliegend angeordnete Klemmkeile 35 eingreifen. Die Klemmkeile 35 sind stabförmig ausgebildet und beaufschlagen alle drei Buchsenelemente 13. An ihren in Figur 6 gezeigten unteren Enden sind sie jeweils an der Gehäusewand, beziehungsweise dem flanschartigen Adapterabschnitt 19 in Anlenkpunkten 36 angelenkt, während die oberen Enden der Klemmkeile 35 mittels wenigstens einer Zugstange 37 aufeinander zu beansprucht werden. In der in Figur 6 gezeigten Darstellung ist zusätzlich zu dem äussersten oberen Ende der Klemmkeile 35 angeordneten Zugstange 37 noch eine weitere Zugstange angeordnet. Die auf diese Weise beaufschlagten stabförmigen Klemmkeile 35 bewirken auf vergleichsweise einfache Weise die Befestigung der Buchsenelemente 13 bei der jeweiligen Anschlussöffnung 17 des flanschartigen Adapterabschnittes.

An einer Grenzfläche zwischen dem flanschähnlichen Ende der Buchsenelemente 13 und der die Anschlussöffnung 17 umgebenden Gehäusewand 19 ist wenigstens eine Dichtung 38 eingefügt, welche die erforderliche Gasdichtheit dieser Verbindung gewährleistet.

Die Befestigung der Buchsenelemente 13 ist hierbei so vorgesehen, dass nach Einstecken der Buchsenelemente 13 in die vorgesehenen Anschlussöffnungen 17 die jeweils zugeordneten, schwenkbar an der Gehäusewand angeordneten stabförmigen Klemmkeile 35 in die am flanschähnlichen Ende jedes zugeordneten Buchsenelementes 13 eingeformte Haltenut eingreifen und mittels der wenigstens einen Zugstange 37 so verspannt werden, dass jedes Buchsenelement 13 unverrückbar und gasdicht im Gehäuse 3 fixiert ist.

In Figur 5 ist im Längsschnitt durch die Gehäusewand des Gehäuses bei zwei flanschartigen Adapterabschnitten die Befestigung der drei Buchsenelemente 13 einer weiteren Ausführungsform der Steckverbindung 12 in ähnlicher Lage wie in Figur 4 dargestellt. Aus dem Schnitt der Gehäusewand beim flanschartige Adapterabschnitt geht hervor, dass die Gehäusewand zwischen zwei benachbarten Anschlussöffnungen 17 zwischen den rohrähnlichen Gehäuseabschnitten 32 partiell derart eingezogen ist, dass ein Fenster 45 in den Gehäusen 3, 4 entsteht. Dieser Einzug dient dazu, das Volumen der Gasräume 15, 16 so gering wie möglich zu halten.

In dieser Darstellung sind einerseits die Lage der zwischen flanschartigem Adapterabschnitt 19 und Buchsenelement 13 eingefügten Dichtung 38 zu erkennen und andererseits die Wirkungsweise der Klemmkeile 35, welche aufgrund der Anschrägung der Klemmkeile 35 in Wechselwirkung mit einer in der korrespondierenden Ringnut 46 eingeformten Anschrägung stehen. Das heisst, je weiter die Klemmkeile 35 durch Verspannung der Zugstange 37 aufeinander zu beansprucht werden, um so stärker wirkt eine hierzu quer angreifende, sich in x-Richtung erstreckende Kraft, welche die Buchsenelemente 13 gegen die Dichtfläche innen am flanschartigem Adapterabschnitt 19, so dass die Dichtung 38 nach aussen entsprechend beaufschlagt ist.

Aus der Figur 5 geht weiter hervor, dass die Steckerbuchsen 41 der buchsenförmigen Leiteranschlüsse 40 der Buchsenelemente 13 einer Steckverbindung über das hülsenförmige Kontaktelement 14 in Form des Kontaktstifts 25 elektrisch miteinander verbunden sind. Weiter illustriert die Figur 5, wie die buchsenförmigen Leiteranschlüsse 40 über das becherförmige Isolationselement 27 mit einer Steckerbuchse 41 verbunden sind, welche zum Positionieren des Buchsenelementes 13 in den Anschlussöffnungen 17 dient. Die elektrische Isolation der buchsenförmigen Leiteranschlüsse 40 und des hülsenförmigen Kontaktelement 14 zur Steckerbuchse 41 beziehungsweise zum auf Erdpotential liegenden Gehäuse 3 erfolgt über eine hülsenförmige Silikonmanschette 42.

Bei der oberen Ausführungsform der in Figur 5 gezeigten Steckverbindung 12 ist eine erste Feldsteuerelektrode 43 in der Silikonmanschette 42 integriert. Im Gegensatz dazu ist bei der unteren Ausführungsform der in Figur 5 gezeigten Steckverbindung 12 eine zweite Feldsteuerelektrode 44 bei der Montage der Silikonmanschette 42 in eine Aufnahmeöffnung von Letzterer eingelegt worden.

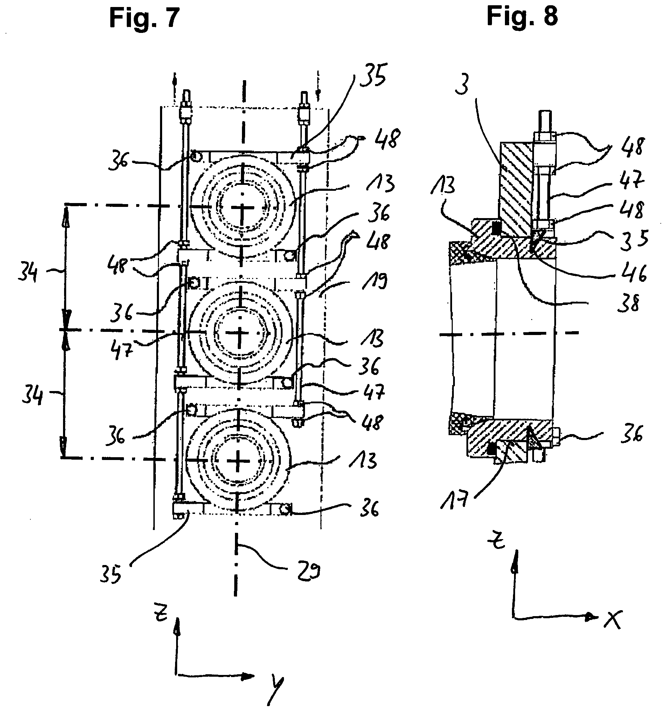

Aus der Figur 3 geht in Zusammenschau mit **Figur 7** und **Figur 8** eine dritte Variante der Steckverbindung hervor. Aufgrund dieser Ähnlichkeit zur zweiten Variante der Steckverbindung wird nachfolgend nur auf die Unterschiede zur den Figuren 5 und 6 eingegangen. Gleiche oder gleich wirkende Elemente sind wiederum mit denselben Bezugszeichen versehen.

Ähnlich wie in den Figuren 5 und 6 sind in den Figuren 7 und 8 zwei der drei nebeneinander beziehungsweise hier übereinander in einer geraden Linie 29 angeordneten Buchsenelementen 13 am flanschartigen Adapterabschnitt 19 des ersten Moduls gezeigt. Dabei greifen die Buchsenelemente 13 jeweils von der Innenseite des Gehäuses - also durch den Gasraum 15 - her in darin eingeformte gehäuseseitige Anschlussöffnungen 17 ein. Jedes der Buchsenelemente 13 ist hierbei an seinem der Anschlussöffnung 17 zugewandten flanschähnlichen Ende mit einer gleichmässig am Umfang angeordneten, nicht näher gezeigten Nut 46 versehen, in welche jeweils einander diametral gegenüberliegend angeordnete Klemmkeile 35 eingreifen. Die Klemmkeile 35 sind stabförmig ausgebildet und jeweils wechselweise einendig an der Gehäusewand in Anlenkpunkten 36 angelenkt. Hierbei bedeutet wechselweise, dass die Anlenkpunkte 36 der Klemmkeile 35 in Steckrichtung X gesehen abwechselnd auf der einen und dann auf der gegenüberliegenden Seite der Geraden 29 angeordnet sind. Das andere Ende jedes stabförmigen Klemmkeils 35 ist jeweils mit einer Durchgangsbohrung versehen, durch welche eine Gewindestange 47 greift. Die Gewindestange 47 bewirkt mittels entsprechend positionierter Gewindemuttern 48 die Klemmverspannung der zugeordneten, von ihr beaufschlagten stabförmigen Klemmkeile 35 und somit die Befestigung der Buchsenelemente 13.

An der Grenzfläche zwischen dem flanschähnlichen Ende des Buchsenelementes 13 und der die gehäuseseitige Anschlussöffnung 17 umgebenden Gehäusewand des flanschartigen Adapterabschnitts 19 ist wenigstens eine Dichtung 38 eingefügt, welche die erforderliche Gasdichtheit dieser Steckkontaktverbindung gewährleistet. Die Befestigung der Buchsenelemente 13 ist hierbei so vorgesehen, dass nach Einstecken der Buchsenelemente 13 in die vorgesehenen gehäuseseitigen Anschlussöffnungen 17 die jeweils zugeordneten, schwenkbar an der Gehäusewand des flanschartigen Adapterabschnitts 19 angeordneten stabförmigen Klemmkeile 35 in die am flanschähnlichen Ende der zugeordneten Buchsenelemente 13 eingeformte Haltenut 46 eingreifen und mittels der an dem jeweiligen als Gewindestange ausgebildeten Zuganker 47 vorgesehenen Stellmuttern 48 so verspannt werden, dass jedes Buchsenelement 13 unverrückbar und gasdicht im Gehäuse 3 fixiert ist.

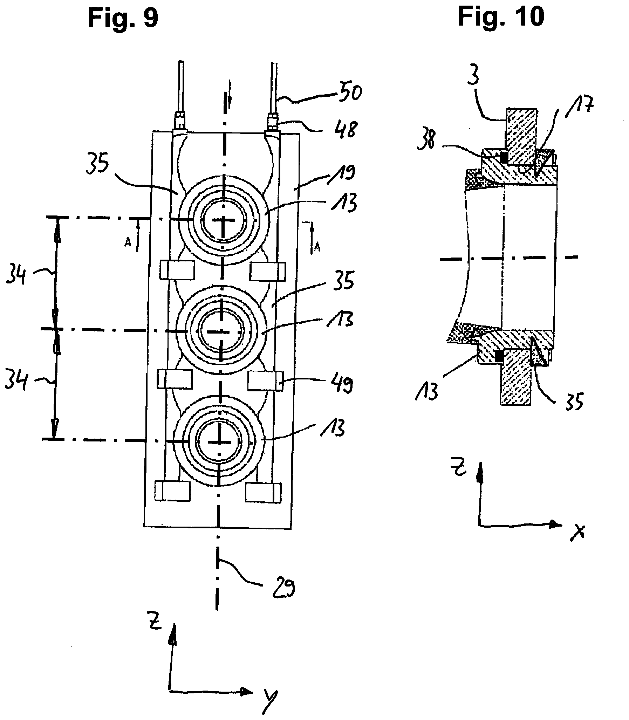

In Fig. 8 ist im Längsschnitt durch die Gehäusewand des flanschartigen Adapterabschnitts 19 die Befestigung einer einzelnen der drei Buchsenelemente 13 dargestellt. In dieser Darstellung sind einerseits die Lage der zwischen Gehäusewand des flanschartigen Adapterabschnitts 19 und Buchsenelement 13 eingefügten Dichtung 38 zu erkennen und andererseits die Wirkungsweise der Klemmkeile 35, welche aufgrund der Anschrägung der Klemmkeile 35 in Wechselwirkung mit einer in der korrespondierenden Ringnut 46 eingeformten Anschrägung stehen. Das heisst, je weiter die Klemmkeile 35 durch Verspannung der Stellmuttern 48 aufeinander zu beansprucht werden, um so stärker wirkt eine hierzu quer angreifende, in X-Richtung wirkende Kraft, welche die Buchsenelemente 13 gegen die Dichtfläche und damit gegen die Dichtung 38 nach aussen beaufschlagt. Aus der Figur 3 geht in Zusammenschau mit **Figur 9** und **Figur 10** eine vierte Variante der Steckverbindung hervor. Aufgrund der Ähnlichkeit zur zweiten Variante der Steckverbindung wird nachfolgend nur auf die Unterschiede zur den Figuren 5 und 6 eingegangen. Gleiche oder gleich wirkende Elemente sind wiederum mit denselben Bezugszeichen versehen.

Die Figuren 9 und 10 zeigen die Befestigung von drei nebeneinander beziehungsweise hier übereinander in einer geraden Linie 29 angeordneten Buchsenelemente 13, wobei die Buchsenelemente 13 jeweils von der Innenseite des Gehäuses 3 her - also vom Gasraum 15 her - in darin eingeformte gehäuseseitige Anschlussöffnungen 17 eingreifen.

Jedes der Buchsenelemente 13 ist hierbei an seinem der gehäuseseitige Anschlussöffnungen 17 zugewandten flanschähnlichen Ende mit einer gleichmässig am Umfang angeordneten, nicht näher gezeigten Nut 46 versehen, in welche jeweils einander bezüglich der Steckachse X diametral gegenüberliegend angeordnete Klemmkeile 35 eingreifen. Die Klemmkeile 35 sind stabförmig ausgebildet und beiderseits der in regelmässigem Abstand 34 entlang der Geraden 29 angeordneten Buchsenelemente 13 angeordnet.

Für jeden stabförmigen Klemmkeil 35 sind jeweils oberhalb und unterhalb der Buchsenelemente 13 so genannte Halteelemente 49 vorgesehen, welche die Klemmkeile 35 lateral in Richtung der Steckrichtung X der Buchsenelemente 13 beaufschlagen, wodurch die Klemmverspannung der zugeordneten, von ihnen beaufschlagten Klemmkeile 35 und somit die Befestigung der Buchsenelemente 13 bewirkt wird. An dem in Figur 10 gezeigten oberen Ende sind jeweils Zuganker 50 gezeigt, welche mittels Spannmuttern 48 die Haltekraft unterstützen.

An der Grenzfläche zwischen dem flanschähnlichen Ende des Buchsenelementes 13 und der die gehäuseseitigen Anschlussöffnungen 17 umgebenden Gehäusewand ist wenigstens eine Dichtung 38 eingefügt, welche die erforderliche Gasdichtheit dieser Steckverbindung gegen das Gehäuse 3 gewährleistet.

Die Befestigung der Buchsenelemente 13 ist hierbei so vorgesehen, dass nach Einstecken der Buchsenelemente 13 in die vorgesehenen gehäuseseitigen Anschlussöffnungen 17 die jeweils zugeordneten, an der Gehäusewand geführten Klemmkeile 35 in die am flanschähnlichen Ende der zugeordneten Buchsenelemente 13 eingeformte Haltenut 46 eingreifen und mittels der an dem jeweiligen als Gewindestange ausgebildeten Zuganker 50 vorgesehenen Stellmuttern 48 so verspannt werden, dass jedes Buchsenelemente 13 unverrückbar und gasdicht im Gehäuse 3 fixiert ist.

In Figur 10 ist im Längsschnitt durch die Gehäusewand beim flanschartigen Adapterabschnitt die Befestigung einer einzelnen der drei Buchsenelemente 13 dargestellt. In dieser Darstellung sind einerseits die Lage der zwischen Gehäusewand und Buchsenelementen 13 eingefügten Dichtung 38 zu erkennen und andererseits die Wirkungsweise der Klemmkeile 35, welche aufgrund der Anschrägung der Klemmkeile 105 in Wechselwirkung mit einer in der korrespondierenden Ringnut 46 eingeformten Anschrägung stehen. Das heisst, je weiter die Klemmkeile 35 durch Verspannung der Stellmuttern 48 aufeinander zu beansprucht werden, um so stärker wirkt eine hierzu quer angreifende Kraft in Richtung der Steckachse X. Diese Kraft beaufschlägt die Buchsenelemente 13 gegen die Dichtfläche und damit gegen die Dichtung 38 nach aussen.

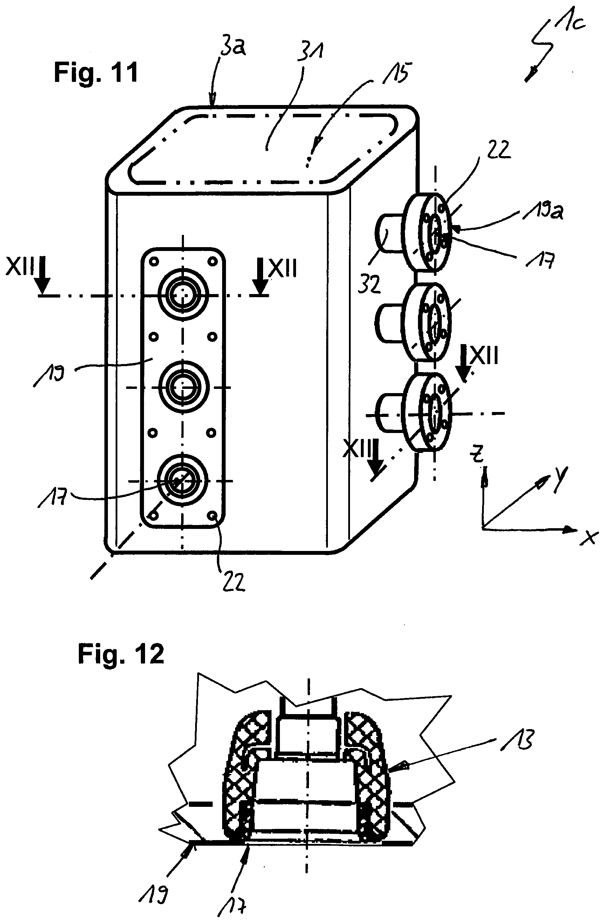

Anhand der Figur 11 soll gezeigt werden, dass sich die vorliegende Erfindung nicht nur auf sich entlang einer einzigen Achse x im Gasraum erstreckende Phasenleiter beschränkt, sondern dass auch Winkelabgänge im Gasraum möglich sind, so dass eine erste Gruppe von Steckverbindungen unter einem Winkel zu einer zweiten Gruppe von Steckverbindungen steht. Der in der XZ-Ebene ausgerichtete flanschartige Adapterabschnitt 19 erstreckt sich rechtwinklig zum in der YZ-Ebene Ebene ausgerichteten, weiteren flanschartigen Adapterabschnitts 19a und ist in der Gehäusewand der Hauptkammer 31 weitgehend integriert. Ähnlich wie in Figur 3 gezeigt, ist die Hauptkammer 31 des Gasraums 15 über rohrartige Gehäuseabschnitte 32 mit den gehäuseseitigen Anschlussöffnungen 17 beim weiteren flanschartigen Adapterabschnitt 19a verbunden. Im Unterschied zum in Figur 3 gezeigten Gehäuse 3 weist das Gehäuse 3a jedoch pro Leiterphase drei separate flanschartige Adapterabschnitte 19a auf.

Eine derartige Ausführungsform eines im Rahmen der vorliegenden Beschreibung sowohl als erster Modul, als auch als zweiter Modul einsetzbarer GIS-Modul trägt insbesondere bei Hochspannungsanwendungen erheblich zur vielseitigen, modularen Einsetzbarkeit der GIS-Module bei.

Aus **Figur 12** geht in Zusammenschau mit Figur 11 hervor, dass beispielsweise ein weibliches Kontaktteil der Steckverbindung in Form des Buchsenelementes 13 sowohl bei beiden Ausführungsformen der flanschartigen Adapterabschnitte 19, 19a einsetzbar ist.

### Bezugszeichenliste

- 1,1a,1b,1c: Erster Modul
- 2,2a,2b,: zweiter Modul
- 3: Gehäuse des ersten Moduls
- 4: Gehäuse des zweiten Moduls
- 5,6,7: Phasenleiter des ersten Moduls
- 8,9,10: Phasenleiter des zweiten Moduls
- 11: Messwandler
- 12: Steckverbindung
- 13: Buchsenelement
- 14: Kontaktelement
- 15: Gasraum des ersten Moduls
- 16: Gasraum des zweiten Moduls
- 17, 18: Gehäuseseitige Anschlussöffnungen
- 19: Flanschartiger Adapterabschnitt des 1. Moduls
- 20: Flanschartiger Adapterabschnitt des 2. Moduls
- 22: Schraubverbindung
- 23: Klemmflansch
- 24: Erste Ebene
- 25: Kontaktstift
- 26: Isolationskörper
- 27: Becherförmiges Isolationselement
- 28: Isolationshülse
- 29: Gerade / gerade Linie
- 30: Spannring
- 31: Hauptkammer
- 32: Gehäuseabschnitt
- 33: Zweite Ebene
- 34: Abstand
- 35: Klemmkeil
- 36: Anlenkpunkt
- 37: Zugstange
- 38: Dichtung
- 40: Buchsenförmiger Leiteranschluss
- 41: Steckerbuchse
- 42: Silikonmanschette
- 43: Erste Feldsteuerelektrode
- 44: Zweite Feldsteuerelektrode
- 45: Fenster
- 46: Ringnut
- 47: Gewindestange
- 48: Gewindemutter
- 49: Halteelement
- 50: Zuganker

## Patentansprüche

1. Gasisolierte Hochspannungsschaltanlage mit einem ersten Modul (1,1a,1b,1c) und einem zweiten Modul (2, 2a, 2b),
• wobei die Module (1,2) jeweils einen als Druckbehälter ausgeführten Gasraum (15, 16) mit mindestens zwei Phasenleitern (5, 6, 7, 8, 9, 10) aufweisen,
• wobei der Gasraum (15, 16) jeweils durch ein Gehäuse (3, 4) begrenzt ist und derart mit einem Isoliergas gefüllt ist, dass die mindestens zwei Phasenleiter (5, 6, 7, 8, 9, 10) im jeweiligen Modul (1, 2) elektrisch isoliert angeordnet sind, und
• wobei der erste Modul (1) derart mit dem zweiten Modul (2) verbunden ist, dass der erste Gasraum (15) und der zweite Gasraum (16) hydraulisch voneinander isoliert sind, und dass die Phasenleiter (8, 9, 10) im ersten Modul (1) im Betrieb der Hochspannungsschaltanlage mit den Phasenleitern (5, 6, 7) gleichen elektrischen Potentials des zweiten Moduls (2) elektrisch verbunden sind,
• wobei die beiden Gasräume (15, 16) pro Phasenleiter (5, 6, 7, 8, 9, 10) jeweils eine gehäuseseitige Anschlussöffnung (17, 18) aufweisen, welche den jeweiligen Phasenleiter (5, 6, 7, 8, 9, 10) umgreift und in einen flanschartigen Adapterabschnitt (19, 20) mündet,
• wobei der flanschartige Adapterabschnitt (19) des ersten Moduls (1) mit dem flanschartigen Adapterabschnitt (20) des zweiten Moduls (2) mechanisch lösbar verbindbar ist, und
• wobei jeder der mindestens zwei Phasenleiter (8, 9, 10) im ersten Modul (1) mit dem entsprechenden Phasenleiter (5, 6, 7) gleichen elektrischen Potentials des zweiten Moduls (2) jeweils über eine lösbare Steckverbindung (12) elektrisch verbindbar ist,
**dadurch gekennzeichnet, dass** jede Steckverbindung (12) aufweist
• einen Isolierkörper (26, 27, 28), durch den die zwei Gasräume (15, 16) voneinander getrennt sind, und
• entweder einen Steckkontakt mit einem am Adapterabschnitt (19) des ersten Moduls (1) befestigten ersten Buchsenelement (13) und einem am Adapterabschnitt (20) des zweiten Moduls (2) befestigten zweiten Buchsenelement (13), welche bei der Montage der zwei Module (1, 2) miteinander über ein leitendes Kontaktelement (14) elektrisch miteinander verbunden sind, wobei eine flanschseitige Abdichtung der Gasräume (15, 16) über Isolationsabschnitte des Isolierkörpers (26,27,28) erfolgt, welche im Betrieb gleichzeitig eine elektrische Isolation des entsprechenden Phasenleiters (5, 6, 7, 8, 9, 10) gegen die Gehäuse (3, 4) gewährleisten,
• oder ein weibliches (13) und ein männliches (25) Kupplungsteil in Form eines am Adapterabschnitt (19) des ersten Moduls (1) befestigten Buchsenelementes (13) und eines elektrisch damit verbindbaren und am Adapterabschnitt (20) des zweiten Moduls (2) befestigten Kontaktstifts (25), wobei der Isolierkörper (26,27,28) mehrteilig ist und mindestens ein becherförmiges Isolationselement (27) und ein mit dem becherförmigen Isolationselement dichtend zusammenwirkendes, zylinderförmiges Isolationselement (28) umfasst, wobei das becherförmige Isolationselement (27) am Buchsenelement (13) angepasst ist und das zylinderförmige Isolationselement (28) den Kontaktstift (25) lateral umfasst, und wobei das becherförmige Isolationselement (27) als auch das zylinderförmige Isolationselement (28) gasdichte, feste Verbindungen zum jeweiligen Gehäuse (3, 4) im Bereich der flanschartigen Adapterabschnitte (19, 20) bilden, und
• wobei die weiblichen Buchsenelemente (13) und/oder männlichen Kontaktstifte (25) der lösbaren Steckverbindung (12) vor der Montage der beiden Module (1, 2) aneinander vom Inneren einer Hauptkammer des Gasraums (15, 16) her in den flanschartigen Adapterabschnitten (19, 20) mit einer lösbaren Sicherungseinrichtung (30) in ihrer zugedachten Position in der jeweiligen Anschlussöffnung (17, 18) gehalten sind.

2. Gasisolierte Hochspannungsschaltanlage nach Anspruch 1, **dadurch gekennzeichnet, dass** die Gasräume (15, 16) der Module (1, 2) Druckbehälter sind, welche für einen Betrieb der Hochspannungsschaltanlage bei einem Nominaldruck von mindestens 2 bar im jeweiligen Gasraum (15, 16) ausgelegt sind.

3. Gasisolierte Hochspannungsschaltanlage nach Anspruch 1 oder 2, **dadurch gekennzeichnet, dass** sich die mindestens zwei Steckverbindungen (12) zumindest beim flanschartigen Adapterabschnitt (19, 20) parallel zueinander liegend in einer ersten Ebene (24) erstrecken.

4. Gasisolierte Hochspannungsschaltanlage nach Anspruch 3, **dadurch gekennzeichnet, dass** zumindest zwei flanschartige Adapterabschnitte (19) des ersten Moduls (1) in einer zweiten Ebene (33) angeordnet sind, wobei die zweite Ebene quer zur ersten Ebene (24) angeordnet ist, insbesondere rechtwinklig zur ersten Ebene (24).

5. Gasisolierte Hochspannungsschaltanlage nach einem der Ansprüche 1 bis 4, **dadurch gekennzeichnet, dass** die flanschartigen Adapterabschnitte (19, 20) von mindestens zwei Anschlussöffnungen (17, 18) desselben Moduls (1, 2) jeweils zumindest teilweise in einen gemeinsamen Adapterabschnitt (19) integriert sind.

6. Gasisolierte Hochspannungsschaltanlage nach einem der Ansprüche 1 bis 5, **dadurch gekennzeichnet, dass** die Adapterabschnitte (19, 20) von mindestens zwei Anschlussöffnungen (17, 18) desselben Moduls (1c) jeweils zumindest teilweise in einen gehäuseseitigen Wandabschnitt des jeweiligen Moduls (1c) integriert sind.

7. Gasisolierte Hochspannungsschaltanlage nach einem der Ansprüche 1 bis 6, **dadurch gekennzeichnet, dass** der erste Modul (1) und der zweite Modul (2) mindestens je drei Phasenleiter aufweisen sowie dass die mindestens drei lösbaren Steckverbindungen (12) in einem regelmässigen Abstand (34) voneinander entfernt angeordnet sind.

8. Gasisolierte Hochspannungsschaltanlage nach einem der Ansprüche 1 bis 7, **dadurch gekennzeichnet, dass** das erste Buchsenelement (13) und das zweite Buchsenelement (13) über ein stiftförmiges Kontaktelement (14) miteinander elektrisch verbunden sind, wobei das erste Buchsenelement (13) am Adapterabschnitt (19) des ersten Moduls (1) befestigt ist und das zweite Buchsenelement (13) am Adapterabschnitt (20) des zweiten Moduls (2) befestigt ist.

9. Gasisolierte Hochspannungsschaltanlage nach einem der Ansprüche 1 bis 7, **dadurch gekennzeichnet, dass** mindestens eine lösbare Steckverbindung (12) ein erstes Buchsenelement (13) und einen elektrisch damit verbindbaren Kontaktstift (25) aufweist, wobei das erste Buchsenelement (13) am Adapterabschnitt (19) des ersten Moduls (1a) befestigt ist und der Kontaktstift am Adapterabschnitt (20) des zweiten Moduls (2a) befestigt ist.

10. Gasisolierte Hochspannungsschaltanlage nach einem der Ansprüche 1 bis 9, **dadurch gekennzeichnet, dass** die Adapterabschnitte (19) des ersten Moduls (1) und die Adapterabschnitte (20) des zweiten Moduls (2) zur mechanischen Verbindung der zwei Module (1, 2) jeweils mit mindestens einer Schraubverbindung (22) miteinander verbindbar sind.

11. Gasisolierte Hochspannungsschaltanlage nach einem der Ansprüche 1 bis 9, **dadurch gekennzeichnet, dass** die Adapterabschnitte (19) des ersten Moduls (1) und die Adapterabschnitte (20) des zweiten Moduls (2) zur mechanischen Verbindung der zwei Module (1,2) jeweils mit mindestens einer Klemmverbindung miteinander verbindbar sind, welche die Adapterabschnitte (19, 20) zumindest abschnittweise umfangsseitig umgreift.

12. Gasisolierte Hochspannungsschaltanlage nach einem der vorhergehenden Ansprüche, **dadurch gekennzeichnet, dass** beim Isolierkörper (26) mindestens eine sich in Richtung der Steckverbindungen erstreckende Feldsteuerelektrode (43, 44) angeordnet ist.

13. Gasisolierte Hochspannungsschaltanlage nach Anspruch 12, **dadurch gekennzeichnet, dass** die mindestens eine Feldsteuerelektrode (43, 44) zumindest teilweise am oder im Isolierkörper (26) integriert ist.

14. Gasisolierte Hochspannungsschaltanlage nach Anspruch 12, **dadurch gekennzeichnet, dass** die mindestens eine Feldsteuerelektrode (44) als Einlegeelement geformt ist, welches vor dem Verbinden des ersten GIS-Moduls (1) mit dem zweiten GIS-Modul (2) in das becherförmige Isolationselement (27) eingesetzt und/oder in das zylinderförmige Isolationselement (42) einlegbar worden ist.

15. Gasisolierte Hochspannungsschaltanlage nach einem der vorhergehenden Ansprüche, **dadurch gekennzeichnet, dass** das mindestens eine becherförmige Isolationselement (27) und das zylinderförmige Isolationselement (42) unterschiedliche Isolationsmaterialien umfassen, wie etwa Giessharz und Silikon.

## Claims

1. Gas-insulated high-voltage switchgear assembly having a first module (1, 1a, 1b, 1c) and a second module (2, 2a, 2b),
• with the modules (1, 2) each having a gas area (15, 16), which is in the form of a pressure vessel and has at least two phase conductors (5, 6, 7, 8, 9, 10),
• with the gas area (15, 16) in each case being bounded by a housing (3, 4) and being filled with an insulating gas such that the at least two phase conductors (5, 6, 7, 8, 9, 10) are arranged in an electrically isolated manner in the respective module (1, 2), and
• with the first module (1) being connected to the second module (2) such that the first gas area (15) and the second gas area (16) are hydraulically isolated from one another, and such that the phase conductors (8, 9, 10) in the first module (1) are electrically connected during operation of the high-voltage switchgear assembly to the phase conductors (5, 6, 7) at the same electrical potential in the second module (2),
• wherein the two gas areas (15, 16) each have a connecting opening (17, 18) on the housing side for each phase conductor (5, 6, 7, 8, 9, 10), which connecting opening (17, 18) clasps the respective phase conductor (5, 6, 7, 8, 9, 10) and opens into a flange-like adaptor section (19, 20),
• with the flange-like adaptor section (19) of the first module (1) being mechanically detachably connectable to the flange-like adaptor section (20) of the second module (2), and
• with each of the at least two phase conductors (8, 9, 10) in the first module (1) being electrically connectable to the corresponding phase conductor (5, 6, 7) at the same electrical potential in the second module (2), in each case via a detachable plug connection (12),
**characterized in that** each plug connection (12) has
• an insulating body (26, 27, 28), by which the two gas areas (15, 16) are separated from one another, and
• either a plug contact with a first female element (13) attached to the adaptor section (19) of the first module (1) and with a second female element (13) attached to the adaptor section (20) of the second module (2), which are electrically connected to one another via a conductive contact element (14) when fitting the two modules (1, 2) to one another, with the gas areas (15, 16) being sealed on the flanged side via insulation sections of the insulating body (26, 27, 28) which, during operation, simultaneously ensure that the corresponding phase conductor (5, 6, 7, 8, 9, 10) is electrically isolated with respect to the housings (3, 4),
• or a female coupling part (13) and a male coupling part (25) in the form of a female element (13) attached to the adaptor section (19) of the first module (1) and in the form of a contact pin (25) which can be electrically connected thereto and is attached to the adaptor section (20) of the second module (2), with the insulating body (26, 27, 28) being formed from a plurality of parts and comprising at least one insulation element (27) which is in the form of a cup and a cylindrical insulation element (28) which interacts with the insulation element which is in the form of a cup, forming a seal, with the insulation element (27) which is in the form of a cup being adapted to the female element (13), and with the cylindrical insulation element (28) laterally surrounding the contact pin (25), and with the insulation element (27) which is in the form of a cup and the cylindrical insulation element (28) forming gas-tight, fixed connections to the respective housing (3, 4) in the region of the flange-like adaptor sections (19, 20), and
• with the female elements (13) and/or male contact pins (25) of the detachable plug connection (12) being held in their intended position in the respective connecting opening (17, 18), before the two modules (1, 2) are fitted to one another, from the interior of a main chamber of the gas area (15, 16) in the flange-like adaptor sections (19, 20) by means of a detachable securing device (30).

2. Gas-insulated high-voltage switchgear assembly according to Claim 1, **characterized in that** the gas areas (15, 16) of the modules (1, 2) are pressure vessels, which are designed for operation of the high-voltage switchgear assembly at a nominal pressure of at least 2 bar in the respective gas area (15, 16).

3. Gas-insulated high-voltage switchgear assembly according to Claim 1 or 2, **characterized in that** the at least two plug connections (12) extend parallel to one another, lying on a first plane (24), at least in the case of the flange-like adaptor section (19, 20).

4. Gas-insulated high-voltage switchgear assembly according to Claim 3, **characterized in that** at least two flange-like adaptor sections (19) of the first module (1) are arranged on a second plane (33), with the second plane being arranged transversely with respect to the first plane (24), in particular at right angles to the first plane (24).

5. Gas-insulated high-voltage switchgear assembly according to one of Claims 1 to 4, **characterized in that** the flange-like adaptor sections (19, 20) of at least two connecting openings (17, 18) of the same module (1, 2) are each at least partially integrated in a common adaptor section (19).

6. Gas-insulated high-voltage switchgear assembly according to one of Claims 1 to 5, **characterized in that** the adaptor sections (19, 20) of at least two connecting openings (17, 18) of the same module (1c) are each at least partially integrated in a housing-side wall section of the respective module (1c).

7. Gas-insulated high-voltage switchgear assembly according to one of Claims 1 to 6, **characterized in that** the first module (1) and the second module (2) each have at least three phase conductors, and **in that** the at least three detachable plug connections (12) are arranged at a regular distance (34) away from one another.

8. Gas-insulated high-voltage switchgear assembly according to one of Claims 1 to 7, **characterized in that** the first female element (13) and the second female element (13) are electrically connected to one another via a contact element (14) in the form of a pin, with the first female element (13) being attached to the adaptor section (19) of the first module (1), and with the second female element (13) being attached to the adaptor section (20) of the second module (2).

9. Gas-insulated high-voltage switchgear assembly according to one of Claims 1 to 7, **characterized in that** at least one detachable plug connection (12) has a first female element (13) and a contact pin (25) which can be electrically connected to it, with the first female element (13) being attached to the adaptor section (19) of the first module (1a), and with the contact pin being attached to the adaptor section (20) of the second module (2a).

10. Gas-insulated high-voltage switchgear assembly according to one of Claims 1 to 9, **characterized in that** the adaptor sections (19) of the first module (1) and the adaptor sections (20) of the second module (2) can each be connected to one another by means of at least one screw connection (22), for mechanical connection of the two modules (1, 2).

11. Gas-insulated high-voltage switchgear assembly according to one of Claims 1 to 9, **characterized in that** the adaptor sections (19) of the first module (1) and the adaptor sections (20) of the second module (20) can each be connected to one another by means of at least one clamping connection for mechanical connection of the two modules (1, 2), which clamping connection clasps the adaptor sections (19, 20) on the circumferential side, at least in places.

12. Gas-insulated high-voltage switchgear assembly according to one of the preceding claims, **characterized in that** at least one field control electrode (43, 44), which extends in the direction of the plug connections, is arranged adjacent to the insulating body (26).

13. Gas-insulated high-voltage switchgear assembly according to Claim 12, **characterized in that** the at least one field control electrode (43, 44) is at least partially integrated on or in the insulating body (26).

14. Gas-insulated high-voltage switchgear assembly according to Claim 12, **characterized in that** the at least one field control electrode (44) is in the form of an insert element, which is inserted into the insulation element (27), which is in the form of a cup, and/or is insertable into the cylindrical insulation element (42) before the connection of the first GIS module (1) to the second GIS module (2).

15. Gas-insulated high-voltage switchgear assembly according to one of the preceding claims, **characterized in that** the at least one insulation element (27) which is in the form of cup, and the cylindrical insulation element (42) are composed of different insulation materials, such as casting resin and silicone.

## Revendications

1. Équipement de commutation à haute tension à isolation gazeuse, comprenant un premier module (1, 1a, 1b, 1c) et un deuxième module (2, 2a, 2b),
* les modules (1, 2) possédant respectivement un espace à gaz (15, 16) réalisé sous la forme d'un récipient sous pression et comprenant au moins deux conducteurs de phase (5, 6, 7, 8, 9, 10),
* l'espace à gaz (15, 16) étant respectivement délimité par un boîtier (3, 4) et étant rempli d'un gaz isolant de telle sorte que les au moins deux conducteurs de phase (5, 6, 7, 8, 9, 10) sont disposés électriquement isolés dans le module (1, 2) respectif, et
* le premier module (1) étant relié au deuxième module (2) de telle sorte que le premier espace à gaz (15) et le deuxième espace à gaz (16) sont isolés hydrauliquement l'un de l'autre, et en ce que les conducteurs de phase (8, 9, 10) dans le premier module (1), lors du fonctionnement de l'équipement de commutation à haute tension, sont reliés électriquement aux conducteurs de phase (5, 6, 7) du même potentiel électrique du deuxième module (2),
* les deux espaces à gaz (15, 16) possèdent respectivement une ouverture de raccordement (17, 18) côté boîtier par conducteur de phase (5, 6, 7, 8, 9, 10), laquelle enveloppe le conducteur de phase (5, 6, 7, 8, 9, 10) respectif et débouche dans une portion d'adaptateur (19, 20) de type bride,
* la portion d'adaptateur (19) de type bride du premier module (1) pouvant être reliée de manière mécaniquement détachable avec la portion d'adaptateur (20) de type bride du deuxième module (2), et
* chacun des au moins deux conducteurs de phase (8, 9, 10) dans le premier module (1) pouvant être relié électriquement au conducteur de phase (5, 6, 7) correspondant du même potentiel électrique du deuxième module (2) respectivement par le biais d'une connexion par enfichage (12) amovible,
**caractérisé en ce que** chaque connexion par enfichage (12) possède
* un corps isolant (26, 27, 28) par lequel les deux espaces à gaz (15, 16) sont séparés l'un de l'autre, et
* soit un contact à enfichage muni d'un premier élément formant douille (13) fixé à la portion d'adaptateur (19) du premier module (1) et un deuxième élément formant douille (13) fixé à la portion d'adaptateur (20) du deuxième module (2), lesquels sont reliés électriquement l'un avec l'autre par le biais d'un élément de contact (14) conducteur lors du montage des deux modules (1, 2), une étanchéification côté bride des espaces à gaz (15, 16) étant réalisée par le biais des portions d'isolation du corps isolant (26, 27, 28) qui, en fonctionnement, garantissent en même temps une isolation électrique du conducteur de phase (5, 6, 7, 8, 9, 10) correspondant par rapport au boîtier (3, 4),
* soit une pièce d'accouplement femelle (13) et une pièce d'accouplement mâle (25) sous la forme d'un élément formant douille (13) fixé à la portion d'adaptateur (19) du premier module (1) et d'une broche de contact (25) pouvant être reliée électriquement à celui-ci et fixée à la portion d'adaptateur (20) du deuxième module (2), le corps isolant (26, 27, 28) étant en plusieurs parties et comportant au moins un élément isolant (27) en forme de creuset et un élément isolant (28) de forme cylindrique qui coopère en étanchéité avec l'élément isolant en forme de creuset, l'élément isolant (27) en forme de creuset étant adapté à l'élément formant douille (13) et l'élément isolant (28) de forme cylindrique comprenant la broche de contact (25) latéralement, et l'élément isolant (27) en forme de creuset ainsi que l'élément isolant (28) de forme cylindrique formant des liaisons fixes hermétiques au gaz avec le boîtier (3, 4) respectif dans la zone des portions d'adaptateur (19, 20) de type bride, et
* les éléments formant douille (13) femelles et/ou les broches de contact (25) mâles de la connexion par enfichage (12) amovible, avant le montage des deux modules (1, 2), étant maintenus les uns contre les autres depuis l'intérieur d'une chambre principale de l'espace à gaz (15, 16) dans les portions d'adaptateur (19, 20) de type bride avec un dispositif de blocage (30) amovible dans leur position attribuée dans l'ouverture de raccordement (17, 18) respective.

2. Équipement de commutation à haute tension à isolation gazeuse selon la revendication 1, **caractérisé en ce que** les espaces à gaz (15, 16) des modules (1, 2) sont des récipients sous pression qui sont conçus pour un fonctionnement de l'équipement de commutation à haute tension à une pression nominale d'au moins 2 bars dans l'espace à gaz (15, 16) respectif.

3. Équipement de commutation à haute tension à isolation gazeuse selon la revendication 1 ou 2, **caractérisé en ce que** les au moins deux connexions par enfichage (12) s'étendent parallèlement l'une à l'autre dans un premier plan (24), au moins dans le cas d'une portion d'adaptateur (19, 20) de type bride.

4. Équipement de commutation à haute tension à isolation gazeuse selon la revendication 3, **caractérisé en ce qu'**au moins deux portions d'adaptateur (19) de type bride du premier module (1) sont disposées dans un deuxième plan (33), le deuxième plan étant disposé transversalement par rapport au premier plan (24), notamment perpendiculairement au premier plan (24).

5. Équipement de commutation à haute tension à isolation gazeuse selon l'une des revendications 1 à 4, **caractérisé en ce que** les portions d'adaptateur (19, 20) de type bride d'au moins deux ouvertures de raccordement (17, 18) du même module (1, 2) sont respectivement intégrées au moins partiellement dans une portion d'adaptateur (19) commune.

6. Équipement de commutation à haute tension à isolation gazeuse selon l'une des revendications 1 à 5, **caractérisé en ce que** les portions d'adaptateur (19, 20) d'au moins deux ouvertures de raccordement (17, 18) du même module (1c) sont respectivement intégrées au moins partiellement dans une portion de paroi côté boîtier du module (1c) respectif.

7. Équipement de commutation à haute tension à isolation gazeuse selon l'une des revendications 1 à 6, **caractérisé en ce que** le premier module (1) et le deuxième module (2) possèdent au moins trois conducteurs de phase et **en ce que** les au moins trois connexions par enfichage (12) amovibles sont disposées espacées d'un écart (34) régulier les unes des autres.

8. Équipement de commutation à haute tension à isolation gazeuse selon l'une des revendications 1 à 7, **caractérisé en ce que** le premier élément formant douille (13) et le deuxième élément formant douille (13) sont reliés électriquement l'un à l'autre par le biais d'un élément de contact (14) en forme de broche, le deuxième élément formant douille (13) étant fixé à la portion d'adaptateur (19) du premier module (1) et le premier élément formant douille (13) étant fixé à la portion d'adaptateur (20) du deuxième module (2).

9. Équipement de commutation à haute tension à isolation gazeuse selon l'une des revendications 1 à 7, **caractérisé en ce qu'**au moins une connexion par enfichage (12) amovible possède un premier élément formant douille (13) et une broche de contact (25) qui peut être reliée électriquement à celui-ci, le premier élément formant douille (13) étant fixé à la portion d'adaptateur (19) du premier module (1a) et la broche de contact étant fixée à la portion d'adaptateur (20) du deuxième module (2a) .

10. Équipement de commutation à haute tension à isolation gazeuse selon l'une des revendications 1 à 9, **caractérisé en ce que** les portions d'adaptateur (19) du premier module (1) et les portions d'adaptateur (20) du deuxième module (2) peuvent, en vue de l'assemblage mécanique des deux modules (1, 2), être reliées les unes aux autres respectivement par au moins un assemblage vissé (22) .

11. Équipement de commutation à haute tension à isolation gazeuse selon l'une des revendications 1 à 9, **caractérisé en ce que** les portions d'adaptateur (19) du premier module (1) et les portions d'adaptateur (20) du deuxième module (2) peuvent, en vue de l'assemblage mécanique des deux modules (1, 2), être reliées les unes aux autres respectivement par au moins un assemblage par serrage qui enveloppe les portions d'adaptateur (19, 20) au moins dans certaines portions sur leur pourtour.

12. Équipement de commutation à haute tension à isolation gazeuse selon l'une des revendications précédentes, **caractérisé en ce qu'**au moins une électrode de contrôle de champ (43, 44) qui s'étend en direction des connexions par enfichage est disposée au niveau du corps isolant (26).

13. Équipement de commutation à haute tension à isolation gazeuse selon la revendication 12, **caractérisé en ce que** l'au moins une électrode de contrôle de champ (43, 44) est au moins partiellement intégrée sur ou dans le corps isolant (26).

14. Équipement de commutation à haute tension à isolation gazeuse selon la revendication 12, **caractérisé en ce que** l'au moins une électrode de contrôle de champ (44) est façonnée sous la forme d'un élément inséré qui est introduit dans l'élément isolant (27) en forme de creuset et/ou est devenu insérable dans l'élément isolant (42) de forme cylindrique avant la liaison du premier module GIS (1) avec le deuxième module GIS (2).

15. Équipement de commutation à haute tension à isolation gazeuse selon l'une des revendications précédentes, **caractérisé en ce que** l'au moins un élément isolant (27) en forme de creuset et l'élément isolant (42) de forme cylindrique comportent des matériaux isolants différents, comme par exemple de la résine moulée et du silicone.
